# EUROPEAN PATENT SPECIFICATION

(11) **EP 0 538 541 B1**
(45) Date of publication and mention of the grant of the patent: **13.03.1996**
(21) Application number: 91830454.4
(22) Date of filing: 24.10.1991
(51) Int. Cl.: F16J 15/12

(54) **Improved cylinder-head gasket**
Zylinderkopfdichtung
Joint de culasse

(43) Date of publication of application: 28.04.1993
(73) Proprietor: TAKO PAYEN S.p.a., I-10148 Torino (IT)
(72) Inventor: Martini, Gino, I-13051 Biella (Vercelli) (IT)
(74) Representative: Spandonari, Carlo, Dr. Ing.

(56) References cited:
- EP-A- 0 208 349
- EP-A- 0 214 377
- EP-A- 0 336 049
- DE-A- 1 807 963
- DE-A- 1 948 681
- DE-A- 3 245 383
- DE-B- 1 294 102

## Description

This invention is concerned with a cylinder-head gasket for internal combustion engines as defined in the preamble of claim 1. Such a gasket is known from EP-A-0 214 377.

In an effort to obtain a higher resistance to the combustion pressures and temperatures in the periphery of the cylinders, it is known to increase the thickness of cylinder-head gaskets at the edges of the cylinder apertures (see, e. g., EP-A-0 208 349), so that the clamping load is concentrated in the areas immediately surrounding the cylinders.

However, such load concentrations give rise to deformation of the cylinders, particularly in modern lightweight engines, since the material of the cylinder block tends to bulge out into the cylinder space under the unbalanced clamping pressure. In order to reduce such deformation, it would be desirable to displace the point of maximum pressure slightly away from the cylinder edge, e. g. about 5 mm away.

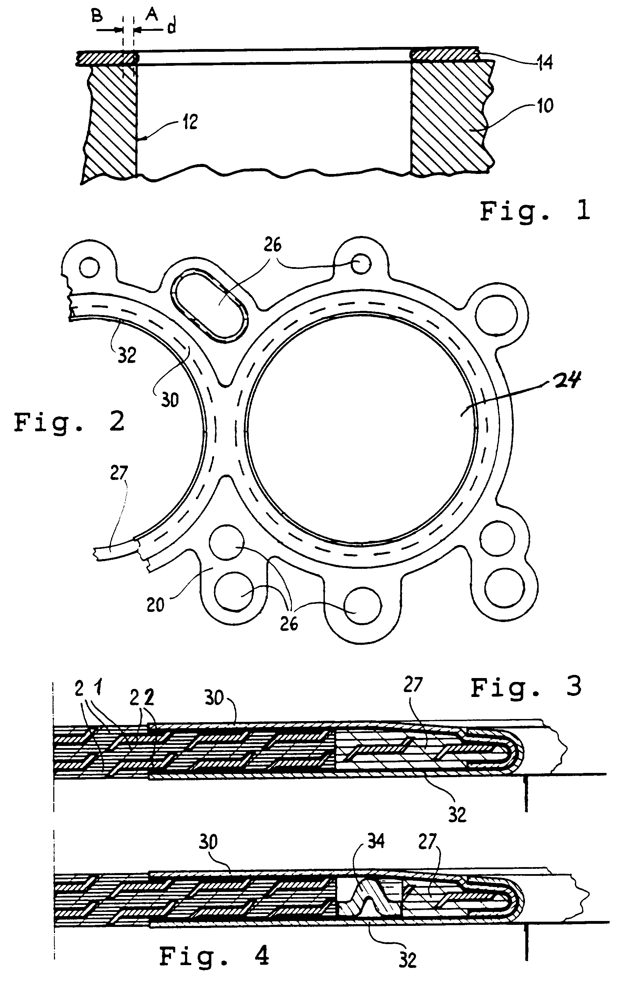

With reference to Fig. 1, a cylinder block 10, shown in a broken-away cross-section, has a cylinder barrel 12, with a gasket 14 at the top. A conventional cylinder-head gasket is designed so that the maximum pressure is applied along dotted line A, but according to the suggestion stated above, the desired point of maximum pressure would be at line B, at a distance shown as d from point A.

However, manufacturers have recoiled from actually designing such gaskets with a displaced maximum pressure, because it is well recognized that a reduced clamping pressure near the cylinder rim also reduces the ability of conventional gasket materials such as asbestos to maintain mechanical properties under heat, and that consequently such a modified gasket would be liable to burn-outs at the cylinder rims.

EP-A-0 214 377 proposes, as a way of improving resistance to burn-outs, to provide, along the rim of the gasket aperture, an insert of metal sheet, which encloses a ring-shaped body of graphite in a powdery or floccular form, which may be mixed with inert fillers such as ceramic or metallic fibers or powders. It is also envisaged that the graphite may be in sheet form. While this arrangement may in fact contribute to prevent burn-outs, it does not relieve the cylinder walls of the pressure unbalance which tends to bulge the wall into the cylinder.

It is therefore the main object of this invention to provide a cylinder-head gasket that will concentrate the clamping pressure at points slightly removed radially away from the edges of cylinder apertures in the gasket, while avoiding burn-outs in the gasket rims during operation.

The invention achieves the above and other objects and advantages, such as will appear from the following disclosure, by providing a cylinder-head gasket for internal combustion engines as recited in claim 1.

The invention will be better understood from the following disclosure of several preferred embodiments, with reference to the attached drawings, wherein:
Fig. 1 is a diagrammatical view in longitudinal cross-section of a portion of a cylinder head with a gasket on top;
Fig. 2 is a plan view of a portion of a gasket according to a first embodiment of the invention;
Fig. 3 is a view in transverse cross-section, on an enlarged scale, of a detail of the gasket of Fig. 2; and
Fig. 4 is a view similar to Fig. 3, for a second embodiment of the invention.

With reference to Fig. 2 and 3, a cylinder-head gasket according to a first embodiment of the invention comprises a main gasket plate 20, preferably a reinforced graphite plate comprising two or three graphite plies having one or two interposed thin, tanged metal sheets 22 (e.g., see EP-A-0 336 049). A number of circular apertures such as 24 are punched out in plate 20, which are coaxial with the cylinders, and which have a diameter larger than the diameter of the cylinders, typically about 10 mm larger. Other openings known per se, such as bolt holes, water passages and oil passages 26 are also usually punched out in plate 20.

A ring 27, punched out from a reinforced graphite plate similar to plate 20, and having an outside diameter substantially equal to the diameter of aperture 26, is inserted within aperture 26. The thickness of ring 27 is slightly smaller than the thickness of the uncompressed main plate 20.

A U-shaped skirt comprises a first annulus 30 of a malleable metal sheet, that is curled in a J-shape around the edge of each of the cylinder apertures 26 to embrace ring 27 and a border region of main plate 20, and a second annulus 32 of a similar metal, extending from the opposite side of the gasket in a J-shape to overlap sheet 30, and swaged over it. The inside diameter of ring 27 is such that the skirts in the complete gasket define a circular, metal-rimmed aperture having the same diameter of the associated cylinder.

In operation, when the gasket is clamped between the cylinder block and the cylinder head, the full clamping pressure will only prevail in the main plate up to the boundary of aperture 26, as shown by arrow C on Fig. 2, i.e. about 5 mm away from the cylinder boundary, while only a considerably reduced pressure will be applied to the portion of the gasket comprising ring 27. Therefore, a ply of the cylinder block adjacent to the cylinder wall will be relieved, and the deformation of the cylinder will be reduced or substantially eliminated. However, the graphite material of ring 27, being highly resistant to extreme temperatures, will not give rise to burn-outs, notwithstanding the reduced compression.

Preferably, the thickness of ring 27 is chosen so that a ratio of 3:1 or 4:1 is obtained between the load on the edge of the main plate and the load on the ring when the gasket is clamped in its operating position under the cylinder head. Typical values of the pressures will be about 60 to 80 N/m on the main plate, as against 20 N/m on the ring. As a rough indication, the natural thickness of ring 27 will typically correspond to the final thickness that the main plate will have in operation, when compressed under the prescribed clamping pressure, although the thickness of ring 27 could be intermediate between the original and the final thickness of the main plate.

Fig. 4 shows a second embodiment, similar under most aspects to the embodiment of Fig. 3, and bearing the same reference numbers for the same parts. However, the second embodiment includes an insert 34, between main plate 20 and ring 27. The insert is a wrinkled metal burr, though it could be a metal channel or a metallic annular ring, e. g. as taught in DE-A-1 294 102 or in DE-A-1 807 963.

In either of the above described embodiments, the skirt 28 could be made of one U-shaped piece of a more malleable metal, and extend over both sides of the gasket to embrace both ring 27 and a border region of plate 20.

## Claims

1. A cylinder-head gasket for internal combustion engines, comprising a main gasket plate (20) of a desired thickness, having at least one circular aperture (24) of a diameter substantially larger than the diameter of an associated cylinder of the engine, and wherein a a graphite ring (27) is inserted in each aperture having a diameter substantially equal to the diameter of the associated cylinder, a U-shaped metal skirt (30, 32) embracing the ring (27) and a portion of the main gasket plate (20) around each aperture (24), characterized in that the graphite ring (27) is a ring punched out of a material comprising two or three graphite plies sandwiching one or two tanged metal sheets respectively, and having a thickness smaller than the thickness of the main gasket plate (20).

2. The gasket of claim 1, characterized in that the main gasket plate is made from a material comprising three graphite plies (21) sandwiching two tanged metal sheets (22).

3. The gasket of any of claim 1 or 2, characterized in that the U-shaped metal skirt comprises one curled annulus (28) of a metal sheet.

4. The gasket of any of claim 1 or 2, characterized in that the U-shaped metal skirt comprises two annuli (30, 32) made from metal sheets on opposite sides of the plate and swaged over each other.

5. The gasket of any of claim 1 to 4, characterized in that the graphite ring has a thickness substantially equal to the thickness of the main gasket plate when subjected to a desired clamping pressure.

6. The gasket of any of claim 1 to 5, characterized in that the graphite ring (27) has an external diameter substantially equal to the diameter of the associated aperture (24) in the main gasket plate (20).

7. The gasket of any of claim 1 to 5, characterized in that the graphite ring (27) has an external diameter substantially smaller than the diameter of the associated aperture (24) in the main gasket plate (20), and that a further ring (34) of deformable material is inserted in the aperture (24) between the graphite ring (27) and the main gasket plate (20).

## Patentansprüche

1. Zylinderkopfdichtung für Verbrennungsmotoren, die eine Hauptdichtungsplatte (20) von gewünschter Dicke und mit mindestens einer runden Öffnung (24) umfaßt, wobei der Durchmesser der Öffnung wesentlich größer als der Durchmesser eines zugehörigen Motorzylinders ist, und wobei in jeder Öffnung ein Graphitring (27) eingefügt ist, der einen mit dem Durchmesser des zugehörigen Zylinders wesentlich gleichen Durchmesser aufweist, und wobei ein U-förmiger, metallischer Kranz (30, 32) den Ring (27) und einen Teil der Hauptdichtungsplatte (20) entlang jeder Öffnung (24) umschließt, dadurch gekennzeichnet, daß der Graphitring (27) aus einem Material ausgestanzt ist, das zwei oder drei, mit einer bzw. zwei gezackten Metallplatten alternierende Graphitschichte aufweist, wobei die Dicke des Graphitrings kleiner als die Dicke der Hauptdichtungsplatte (20) ist.

2. Dichtung nach Anspruch 1, dadurch gekennzeichnet, daß das Material der Hauptdichtungsplatte drei, mit zwei gezackten Metallplatten (22) alternierende Graphitschichte (21) aufweist.

3. Dichtung nach Anspruch 1 oder 2, dadurch gekennzeichnet, daß der U-förmige, metallische Kranz aus einer umgeschlagenen, ringförmigen Blechscheibe (28) besteht.

4. Dichtung nach Anspruch 1 oder 2, dadurch gekennzeichnet, daß der U-förmige, metallische Kranz aus zwei ringförmige Blechscheiben (30, 32) besteht, die je auf einer Seite der Platte liegen und übereinander umgeschlagen sind.

5. Dichtung nach einem der Ansprüche 1 bis 4, dadurch gekennzeichnet, daß die Dicke des Graphitrings im wesentlichen der Dicke der unter einem gewünschten Spanndruck unterstehenden Hauptdichtungsplatte gleich ist.

6. Dichtung nach einem der Ansprüche 1 bis 5, dadurch gekennzeichnet, daß der Außendurchmesser des Graphitrings (27) dem Durchmesser der zugehörigen Öffnung (24) der Hauptdichtungsplatte (20) im wesentlichen gleich ist.

7. Dichtung nach einem der Ansprüche 1 bis 5, dadurch gekennzeichnet, daß der Außendurchmesser des Graphitrings (27) wesentlich kleiner als der Durchmesser der zugehörigen Öffnung (24) der Hauptdichtungsplatte (20) ist, und daß ein weiterer Ring (34) von einem verformbaren Material in der Öffnung, zwischen dem Graphitring (27) und der Hauptdichtungsplatte eingefügt ist.

## Revendications

1. Joint de culasse pour moteurs à combustion interne, comprenant une plaque de joint principale (20) d'une épaisseur désirée, ayant au moins une ouverture circulaire (24) de diamètre sensiblement plus grand du diamètre d'un cylindre associé du moteur, et dans chaque ouverture de laquelle est inséré un anneau de graphite (27) de diamètre sensiblement égal au diamètre du cylindre associé, une bordure métallique en U (30, 32) embrassant l'anneau (27) et une partie de la plaque de joint principale (20) autour de chaque ouverture (24), caractérisé en ce que l'anneau de graphite est un anneau poinçonné en un matériau comprenant deux ou trois couches de graphite entre lesquelles sont interposées une ou deux feuilles métalliques dentelées, respectivement, ledit anneau ayant une épaisseur plus petite que l'épaisseur de la plaque de joint principale (20).

2. Joint selon la revendication 1, caractérisé en ce que la plaque de joint principale est obtenue d'un matériau comprenant trois couches de graphite (21), entre lesquelles sont interposées deux feuilles métalliques dentelées (22).

3. Joint selon la revendication 1 ou 2, caractérisé en ce que la bordure métallique en U comprend une rondelle retroussée de tôle (28).

4. Joint selon la revendication 1 ou 2, caractérisé en ce que la bordure métallique en U comprend deux rondelles de tôle (30, 32) sur côtés opposés de la plaque, qui sont retroussées l'une sur l'autre.

5. Joint selon une quelconque des revendications 1 à 4, caractérisé en ce que l'anneau de graphite a une épaisseur sensiblement égale à l'épaisseur de la plaque de joint principale lorsque celle-ci est soumise à une pression de serrage desirée.

6. Joint selon une quelconque des revendications 1 à 5, caractérisé en ce que l'anneau de graphite (27) a un diamètre extérieur sensiblement égal au diamètre de l'ouverture associée (24) dans la plaque de joint principale (20).

7. Joint selon une quelconque des revendications 1 à 5, caractérisé en ce que l'anneau de graphite (27) a un diamètre extérieur qui est sensiblement plus petit du diamètre de l'ouverture associée (24) dans la plaque de joint principale (20), et en ce qu'un autre anneau (34) d'un matériau déformable est inséré dans l'ouverture (24) entre l'anneau de graphite (27) et la plaque de joint principale (20).
